# EUROPÄISCHE PATENTANMELDUNG

(11) **EP 4 682 582 A2**
(43) Veröffentlichungstag der Anmeldung: **21.01.2026**
(21) Anmeldenummer: 25186285.0
(22) Anmeldetag: 30.06.2025
(51) Int. Cl.: G01S 7/481, G01S 7/497, G01S 17/48

(54) **OPTOELEKTRISCHER SENSOR MIT EINSTELLBARER LINSENAUFNAHME**

(30) Priorität: 15.07.2024 DE 102024120150
(71) Anmelder: Baumer Electric AG, 8500 Frauenfeld (CH)
(72) Erfinder: Clad, Marius, 8274 Gottlieben (CH); Keller, Reto, 8500 Frauenfeld (CH); Pfister, Dominik, 8526 Oberneunforn (CH)
(74) Vertreter: Strauss, Steffen

(57) **Zusammenfassung**

Die vorliegende Erfindung betrifft einen optoelektrischer Sensor zum Erfassen von Objekten in einem Erfassungsbereich, aufweisend Lichtsendemittel, Lichtempfangsmittel sowie eine Linsenfunktionseinheit, wobei die Linsenfunktionseinheit zum Bündeln und Ausrichten der Lichtsignale entlang eines Sendelichtpfads und/oder Empfangslichtpfads ausgebildet ist und wenigstens eine Linse, eine Linsenaufnahme zum Halten der wenigstens einen Linse sowie eine Trägereinheit zum Aufnehmen der die wenigstens eine Linse umfassenden Linsenaufnahme aufweist. Erfindungsgemäß ist nun vorgesehen, dass die Linsenaufnahme in der Trägereinheit zumindest in einem Abgleichzustand rotierbar gelagert ist, derart, dass die Linsenaufnahme zusammen mit der wenigstens einen Linse um eine Drehachse relativ zur Trägereinheit rotierbar ist und dass die Linsenaufnahme so ausgebildet ist, dass die optische Achse der wenigstens einen Linse, die senkrecht zur Linsenebene ausgerichtet ist und durch den Linsenmasseschwerpunkt, insbesondere die Linsenmitte, verläuft, um einen Abstand X zur Drehachse D räumlich versetzt verläuft, um die wenigstens eine Linse im Abgleichzustand in einer Ebene orthogonal zur Messrichtung zu verschieben und somit den Empfangslichtpfad relativ zum lichtsensitiven Erfassungselement auszurichten.

## Beschreibung

Die vorliegende Erfindung betrifft einen optoelektrischen Sensor nach Anspruch 1.

Optoelektrische Sensoren zum Erfassen von Objekten sind aus dem Stand der Technik allgemein bekannt.

Die bekannten optoelektrischen Sensoren senden Lichtsignale entlang eines Sendelichtpfads auf einen Erfassungsbereich aus.

An Objekten, die sich im Erfassungsbereich befinden, werden die ausgesendeten Lichtsignale reflektiert. Ein Teil der reflektierten Lichtsignale trifft wieder auf den Sensor. Zum Detektieren der reflektierten Lichtsignale umfasst der Sensor Lichterfassungsmittel mit einem lichtsensitiven Element. Somit kann die Anwesenheit von Objekten innerhalb des Erfassungsbereichs erkannt werden. Ferner ist es auch bekannt, dass der Einfallswinkel der reflektierten Lichtsignale ermittelt wird, um daraus den Abstand des Objekts vom Sensor zu bestimmen.

Bekannte optoelektrische Sensoren umfassen eine Linsenfunktionseinheit, die zum Bündeln und Ausrichten der Lichtsignale ausgebildet sind.

Nach dem Abschluss der Fertigung und/oder Montage optoelektrischer Sensoren ist der Abgleich ein wesentlicher Verfahrensschritt, um die individuellen Fertigungstoleranzen des optoelektrischen Sensors bei der Messwertbestimmung zu berücksichtigen. Beim Abgleich werden die Lichterfassungsmittel und die Lichtempfangsmittel räumlich so positioniert und/oder ausgerichtet, dass Objekte, die sich im Erfassungsbereich vor dem Sensor befinden, detektiert werden können. Konkret realisiert wird dies durch das Verschieben des lichtsensitiven Elements, derart, dass in einem Kalibrierzustand ausgesendete Lichtsignale auf ein Referenzobjekt ausgesendet werden und die am Referenzobjekt reflektierten Lichtsignale dann mittig auf das lichtsensitive Erfassungselement auftreffen.

Allerdings ist die mechanische Funktionalität zum räumlichen Verschieben des Erfassungselements technisch aufwendig und somit kostenintensiv. Ferner hat es sich in der Praxis gezeigt, dass diese Lösungen zudem störanfällig hinsichtlich mechanischer Stöße sind. So wirkt sich bereits eine minimale Verschiebung des lichtsensitiven Erfassungselements negativ auf das Messergebnis des optoelektrischen Sensors aus, weshalb dieser entweder ausgetauscht oder für einen neuen Abgleich nochmals kalibriert werden muss.

Folglich liegt der vorliegenden Erfindung die Aufgabe zugrunde, die aus dem Stand der Technik bekannten Nachteile zu lösen. Insbesondere ist es Aufgabe der vorliegenden Erfindung einen optoelektrischen Sensor anzugeben, der eine Linsenfunktionseinheit umfasst, die sich technisch einfach realisieren lässt und gleichzeitig robust gegenüber mechanischen Belastungen ist.

Diese Aufgabe wird durch einen erfindungsgemäßen optoelektrischen Sensor gemäß dem Anspruch 1 gelöst.

Vorteilhafte Weiterbildungen der Erfindung sind in den Unteransprüchen beschrieben. In den Rahmen der vorliegenden Erfindung fallen sämtliche Kombinationen aus zumindest zwei von in der Beschreibung, den Ansprüchen und/oder den Figuren offenbarten Merkmalen.

Der erfindungsgemäße optoelektrische Sensor ist zum Erfassen von Objekten in einem Erfassungsbereich ausgebildet. Bevorzugt handelt es sich bei dem erfindungsgemäßen optoelektrischen Sensor um einen Triangulationssensor.

Der erfindungsgemäße optoelektrische Sensor umfasst Lichtsendemittel, die so ausgebildet sind, dass Lichtsignale im Wesentlichen in Messrichtung entlang eines Sendelichtpfads auf den Erfassungsbereich ausgesendet werden.

Ferner umfasst der erfindungsgemäße optoelektrische Sensor Lichtempfangsmittel, die so ausgebildet sind, dass an einem Objekt im Erfassungsbereich reflektierte und sich entlang eines Empfangslichtpfads ausbreitende Lichtsignale erfasst und/oder detektiert werden können. Für die Erfassung der Lichtsingale umfassen die erfindungsgemäßen Lichtempfangsmittel ein lichtsensitives Erfassungselement, das insbesondere als eine Empfangszeile ausgebildet ist.

Innerhalb des Erfassungsbereichs kann das zu erfassende Objekt einen unterschiedlichen Abstand zum optoelektrischen Sensor aufweisen. Für die Vielzahl der möglichen Positionen ergibt sich bei einem zumindest anfangsseitig gleichbleibenden und/oder identischen Sendelichtpfad stets ein individueller Empfangslichtpfad, der auf dem lichtsensitiven Erfassungselement endet.

Ferner wird darauf hingewiesen, dass sich der Sendelichtpfad vom Empfangslichtpfad unterscheidet und/oder dass die Position der Lichtsendemittel von der Position der Lichtempfangsmittel abweicht und/oder dass die Lichtsendemittel und die Lichtempfangsmittel durch einen senkrecht zur Messrichtung verlaufenden Basisabstand voneinander beabstandet sind.

Ferner umfasst der erfindungsgemäße optoelektrische Sensor eine von den Lichtsendemitteln und/oder den Lichtempfangsmitteln umfasste Linsenfunktionseinheit. Die erfindungsgemäße Linsenfunktionseinheit ist zum Bündeln und Ausrichten der Lichtsignale entlang des Sendelichtpfads und/oder Empfangslichtpfads ausgebildet.

Die erfindungsgemäße Linsenfunktionseinheit umfasst die wenigstens eine Linse, eine Linsenaufnahme zum Halten der wenigstens einen Linse in einem Funktionszustand sowie eine Trägereinheit zum Aufnehmen der die Linse umfassenden Linsenaufnahme in dem Funktionszustand.

Für den Fall, dass die Linsenfunktionseinheit von den Lichtsendemitteln umfasst ist, passieren Lichtsignale, die von den Lichtsendemitteln erzeugt wurden, die wenigstens eine Linse und werden somit gebündelt und/oder ausgerichtet, derart, dass sich die Lichtsignale in Messrichtung entlang des Sendelichtpfads ausbreiten. Für den Fall, dass sich ein Objekt im Erfassungsbereich befindet, wird somit der Sendelichtpfad und der Empfangslichtpfad durch die Linsenfunktionseinheit bestimmt, da der Ursprung des Empfangslichtpfads durch die Reflexion der sich entlang des Sendelichtpfads ausbreitenden Lichtsignale bestimmt wird.

Für den Fall, dass die Linsenfunktionseinheit von den Lichtempfangsmitteln umfasst ist, passieren Lichtsignale, die sich entlang des Empfangslichtpfad ausbreiten und auf die Lichtempfangsmittel auftreffen, die wenigstens eine Linse, wobei die Lichtsignale dann derart abgelenkt und/oder gebündelt werden, dass die Lichtsignale, insbesondere hinsichtlich einer Breitenerstreckung mittig, auf das lichtsensitive Element auftreffen und somit detektiert werden können.

Erfindungsgemäß ist es nun vorgesehen, dass die Linsenaufnahme in der Trägereinheit zumindest in einem Abgleichzustand rotierbar gelagert ist, derart, dass die Linsenaufnahme zusammen mit der wenigstens einen Linse im Abgleichzustand um eine Drehachse relativ zur Trägereinheit rotierbar ist.

Bevorzugt ist die Linsenaufnahme und die wenigstens eine Linse starr und/oder nicht-lösbar miteinander verbunden und können somit als Einheit rotiert werden.

Ferner ist es im Rahmen dervorliegenden Erfindung vorgesehen, dass die Linsenaufnahme so ausgebildet ist, dass die optische Achse der Linse, die senkrecht zur Linsenebene ausgerichtet ist und durch den Linsenmasseschwerpunkt, insbesondere die Linsenmitte, verläuft, um einen Abstand X zur Drehachse räumlich versetzt verläuft und/oder ausgerichtet ist.

Erfindungsgemäß vorteilhaft wird somit erzielt, dass die Linse im Abgleichzustand in einer Ebene orthogonal zur Messrichtung verschoben werden kann, um den Empfangslichtpfad relativ zum lichtsensitiven Erfassungselement auszurichten.

Anders ausgedrückt, die wenigstens eine Linse wird so in einer senkrecht zur Messrichtung verlaufenden Ebene räumlich verschoben bis der Empfangslichtpfad, insbesondere hinsichtlich einer Breitenerstreckung mittig, auf das lichtsensitive Erfassungselement auftrifft.

Ferner wird in diesem Zusammenhang darauf hingewiesen, dass die Messrichtung parallel zur Drehachse und/oder optischen Achse verläuft.

Die erfindungsgemäße Linsenfunktionseinheit ermöglicht auf konstruktiv einfache und somit kostengünstig herstellbare Weise eine Einflussnahme auf den Verlauf des Empfangslichtpfads relativ zum lichtsensitiven Erfassungselement.

Durch die erfindungsgemäße Linsenfunktionseinheit, die das Beeinflussen des Sendelichtpfads und/oder des Empfangslichtpfads so ermöglicht, dass der Empfangslichtpfad relativ zum lichtsensitiven Erfassungselement positioniert werden kann, wird es nunmehr ermöglicht, dass die weiteren Komponenten der Lichtsendemittel und der Lichtempfangsmittel räumlich festmontiert werden können.

Nach der Montage und/oder Fertigung des erfindungsgemeäßen optoelektrischen Sensors erfolgt dann das erfindungsgemäße Ausrichten der wenigstens einen Linse mittels der Funktionalität der erfindungsgemäßen Linsenfunktionseinheit.

Hierbei wird im erfindungsgemäßen Abgleichzustand die Ausrichtung und/oder der Verlauf des Sendelichtpfads und/oder des Empfangslichtpfads relativ zum lichtsensitiven Erfassungselements eingestellt.

Weiterbildend ist es vorgesehen, dass die Drehachse und die optische Achse parallel ausgerichtet sind.

Die wenigstens eine Linse wird somit von der Linsenaufnahme so gehalten, dass im Abgleichzustand die Linse, insbesondere die Vorderseite der wenigstens einen Linse, in einer Ebene verschiebbar ist, die senkrecht zur Messrichtung ausgerichtet ist.

Zusätzlich oder alternativ ist es ferner weiterbildend vorgesehen, dass die Drehachse durch die Linse verläuft. Konkret bedeutet dies, dass die Drehachse entlang des vollständigen Verstellweges, also insbesondere bei einer 360°-Rotation der Linsenaufnahme relativ zur Trägereinheit, stets durch die wenigstens eine Linse verläuft.

Zusätzlich oder alternativ ist es weiterhin weiterbildend vorgesehen, dass der Abstand x kleiner als der Radius r der wenigstens einen Linse ausfällt.

Der Abstand x ist im Rahmen der vorliegenden Erfindung durch die Strecke und/oder die räumliche Entfernung zwischen der Drehachse und dem Mittelpunkt der Linse definiert. Diese Strecke und/oder räumliche Entfernung verläuft in einer Ebene, die senkrecht zur Messrichtung ausgerichtet ist.

Anders ausgedrückt, verläuft die Drehachse durch die Linse und ist die optische Achse der Linse parallel zur Drehachse ausgebildet, kann der Mittelpunkt der Linse innerhalb einer senkrecht zur Messrichtung ausgerichteten Ebene so verschoben werden, dass der erfindungsgemäße Abgleich, also insbesondere die Ausrichtung und/oder Positionierung des Empfangslichtpfads relativ zum Erfassungselement, durchgeführt werden kann.

Weiterbildend ist es ferner vorgesehen, dass die Linsenaufnahme als ein Kreiszylinder, insbesondere als ein senkrechter Kreiszylinder, mit einem zum Aufnehmen und Ausrichten der wenigstens einen Linse ausgebildeten Durchgangsloch, insbesondere einer Durchgangsbohrung, ausgebildet ist.

Ferner ist es in diesem Zusammenhang bevorzugt vorgesehen, dass das Durchgangsloch nicht mittig im Kreiszylinder ausgebildet ist. Umfasst das Durchgangsloch einen runden Innenquerschnitt ist es besonders bevorzugt, wenn der Mittelpunkt des Durchgangslochs vom Mittelpunkt des Kreiszylinders räumlich beabstandet ist. Ferner ist es besonders bevorzugt, wenn die Drehachse durch den Mittelpunkt des Kreiszylinders verläuft. Durch Rotieren des Kreiszylinders um die Drehachse kann somit auch ein horizontaler Abstand zwischen der Drehachse und dem Mittelpunkt des Durchgangsloch verändert werden.

Der horizontale Abstand bezeichnet in einer Querschnittansicht den entlang der Horizontalen gemessenen Abstand zwischen der Drehachse und dem Mittelpunkt des Durchgangslochs..

Bei einer bevorzugten Ausgestaltung des erfindungsgemäßen optoelektrischen Sensors ist das Durchgangsloch zur Aufnahme der wenigstens einen Linse ausgebildet, wobei das Durchgangsloch einen Kontaktabschnitt mit einem verringerten Innenquerschnittaufweist.

Durch den reduzierten Innenquerschnitt des Kontaktabschnitts kann die Position der Linse innerhalb des Durchgangslochs bestimmt und/oder definiert werden. Bevorzugt ist es nämlich vorgesehen, dass der Innendurchmesser des Durchgangslochs im Wesentlichen dem Außendurchmesser der wenigstens einen Linse entspricht. Die wenigstens eine Linse, die bevorzugt als eine Sammellinse ausgebildet ist, kann somit in das Durchgangsloch eingeführt werden. Da der Kontaktabschnitt einen verringerten Durchmesser umfasst, tritt die wenigstens eine Linse randseitig mit dem Kontaktabschnitt in Kontakt und wird somit definiert ausgerichtet.

Der Kreiszylinder umfasst bevorzugt eine vordere und eine hintere Stirnseite, die zueinander parallel ausgerichtet sind. Ferner umfasst der Kreiszylinder bevorzugt eine äußere Mantelfläche.

Das Durchgangsloch verbindet besonders bevorzugt die beiden gegenüberliegenden Stirnseiten des Kreiszylinders unmittelbar und/oder senkrecht. Ganz besonders bevorzugt umfasst das Durchgangsloch einen im Wesentlichen kreisförmigen Querschnitt. Bevorzugt ist das Durchgangsloch durch eine Durchgangsbohrung ausgebildet. Die Durchgangsbohrung ist senkrecht zu den beiden Stirnseiten ausgerichtet, um die beiden Stirnseiten unmittelbar zu verbinden.

Der Kontaktabschnitt ist bevorzugt sprungförmig oder stufenförmig oder konusförmig ausgebildet, um im Abgleichzustand sowie im Funktionszustand mit der Linse, insbesondere außenseitig und/oder randseitig, in Kontakt zu treten.

Der Abgleichzustand bezeichnet im Rahmen der vorliegenden Erfindung einen Zustand des optoelektrischen Sensors, in dem bereits die wesentlichen optoelektrischen Elemente verbaut sind. Im Abgleichzustand erfolgt das Einstellen der Verstellposition durch das Rotieren der erfindungsgemäßen Linsenaufnahme, um eine Rotationsposition der Linsenaufnahme zu wählen und um den Empfangslichtpfad in Bezug auf das lichtsensitive Erfassungselement oder die auf das lichtsensitive Erfassungselement auftreffenden Lichtsignale in Bezug auf das lichtsensitive Erfassungselement auszurichten.

Es wird darauf hingewiesen, dass der Sendelichtpfad nicht parallel zur optischen Achse verlaufen muss.

Der Funktionszustand des optoelektrischen Sensors bezeichnet einen Betriebszustand des optoelektrischen Sensors. Im Funktionszustand und/oder Betriebszustand werden Lichtsignale mittels der Lichtsendemittel erzeugt und auf den Erfassungsbereich ausgesendet. Ferner werden an einem Objekt im Erfassungsbereich reflektierte Lichtsignale mittels der Lichtempfangsmittel erfasst und somit die Anwesenheit von Objekten oder der Abstand von Objekten erfasst.

Weiterbildend ist es vorgesehen, dass die Linsenfunktionseinheit ein Hülsenelement, insbesondere eine Einpresshülse, umfasst. Das Hülsenelement ist insbesondere so ausgebildet, dass es im Durchgangsloch verpressbar ist, um die wenigstens eine Linse innerhalb des Durchgangsloch und/oder durch Zusammenwirken mit dem Kontaktabschnitt räumlich an der Linsenaufnahme zu fixieren. Die wenigstens eine Linse und der Kreiszylinder sind mit anderen Worten starr und/oder nichtlösbar miteinander verbunden. Eine Positionierung und/oder Ausrichtung der wenigstens einen Linse ist somit nur in Kombination mit der Positionierung der Linsenaufnahme, insbesondere des Kreiszylinders, möglich.

Weiterbildend ist es ferner vorgesehen, dass die Linsenfunktionseinheit eine Blende, insbesondere eine Lochblende, umfasst, wobei die Lochblende im Funktionszustand insbesondere zwischen der Linse und dem Hülsenelement angeordnet ist.

Anders ausgedrückt, nicht nur die wenigstens eine Linse ist im Durchgangsloch durch das Zusammenwirken des Hülsenelements mit dem Kontaktabschnitt fixiert, sondern zusätzlich auch die Blende.

Weiterbildend ist es zudem vorgesehen, dass die Trägereinheit zum Aufnehmen der Linsenaufnahme ein weiteres Durchgangsloch, insbesondere eine weitere Durchgangsbohrung, umfasst.

Eine bevorzugte Ausgestaltung des vorliegenden erfindungsgemäßen optoelektrischen Sensors umfasst zudem, dass die Trägereinheit zum Fixieren der im weiteren Durchgangsloch angeordneten Linsenaufnahme eine Querbohrung und ein lösbares Fixierelement, insbesondere eine Madenschraube, umfasst, wobei das Fixierelement in der Querbohrung festlegbar ist.

Das Fixierelement ist bevorzugt über ein Innengewinde, das in der Querbohrung ausgebildet ist, an der Trägereinheit fixiert und steht endseitig mit der Linsenaufnahme aussenseitig in Kontakt, um die im Abgleichzustand eingestellte Rotationsposition der Linsenaufnahme relativ zur Trägereinheit zu fixieren.

Weiterbildend ist es in diesem Zusammenhang vorgesehen, dass das lichtsensitive Erfassungselement eine Vielzahl lichtsensitiver Erfassungsbereiche aufweist. Diese Erfassungsbereiche sind zueinander unmittelbar benachbart, um die Ausrichtung des Empfangslichtpfads relativ zum Sendelichtpfad zu erfassen.

Die Vielzahl der Erfassungsbereiche, die einzeln auswertbar sind, ermöglichen den Winkel des Empfangslichtpfads relativ zum Sendelichtpfad zu erfassen, um somit den Abstand des Objekts vom Sensor zu bestimmen.

Vorteilhaft lässt sich somit der erfindungsgemäße optoelektrische Sensor als ein Triangulationssensor ausbilden.

Weiterbildend ist es vorgesehen, dass die wenigstens eine Linse als eine Sammellinse ausgebildet ist. Vorteilhaft können somit die Lichtsignale gebündelt werden.

Weiterbildend ist es vorgesehen, dass die Trägereinheit zusätzlich zum Aufnehmen der Lichtsendemittel und der Lichtempfangsmittel ausgebildet ist. Ferner ist es in diesem Zusammenhang auch bevorzugt, wenn die Trägereinheit zumindest eine Aufnahme zum Zusammenwirken mit einem Befestigungselement umfasst, um den optoelektrischen Sensor an einem externen Körper festzulegen und somit den Erfassungsbereich gezielt auf einen zu überwachenden Bereich auszurichten.

Alternativ oder ergänzend ist es ferner weiterbildend vorgesehen, dass die Trägereinheit monolithisch und/oder einstückig ausgebildet ist.

Weiterhin ist es alternativ oder ergänzend vorgesehen, dass die Trägereinheit aus einer Keramik oder aus einem Metall, insbesondere aus einem Stahl-Werkstoff oder einem Aluminium- Werkstoff, ausgebildet ist und/oder dieses als Hauptbestandteil umfasst.

Im Folgenden ist die Erfindung beispielhaft mit Bezug auf die Zeichnungen näher erläutert. Die bei den gezeigten Ausführungsformen exemplarisch dargestellte Merkmalskombination kann nach Maßgabe der obigen Ausführungen entsprechend den für einen bestimmten Anwendungsfall notwendigen Eigenschaften des Erfindungsgegenstands durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen sind Elemente gleicher Funktion und/oder gleichen Aufbaus mit demselben Bezugszeichen bezeichnet.

Es zeigen:
- Fig. 1:: eine schematische Längsschnittdarstellung erfindungsgemäßer Lichtsendemittel mit einer erfindungsgemäßen Linsenfunktionseinheit gemäß einer ersten Ausführungsvariante;
- Fig. 2:: eine stark schematisierte Querschnittdarstellung der erfindungsgemäßen Linsenfunktionseinheit;
- Fig. 3a/b:: zwei weitere schematisierte Längsschnittdarstellung der erfindungsgemäßen Linsenfunktionseinheit zum Veranschaulichen des Abgleichs im erfindungsgemäßen Abgleichzustands;
- Fig. 4:: eine schematische Darstellung eines erfindungsgemäßen optoelektrischen Sensors gemäß einer ersten Ausführungsvariante in einer Draufsicht und in
- Fig. 5a/b: schematische Darstellungen des erfindungsgemäßen optoelektrischen Sensors für eine Nahbereich- und eine Fernbereichsüberwachung jeweils im Betriebszustand und/oder Funktionszustand.

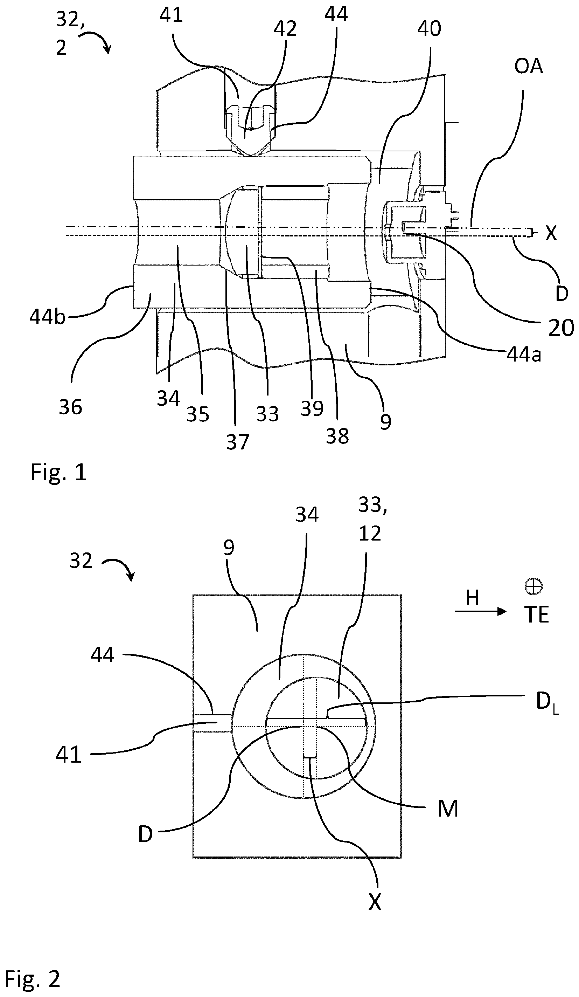

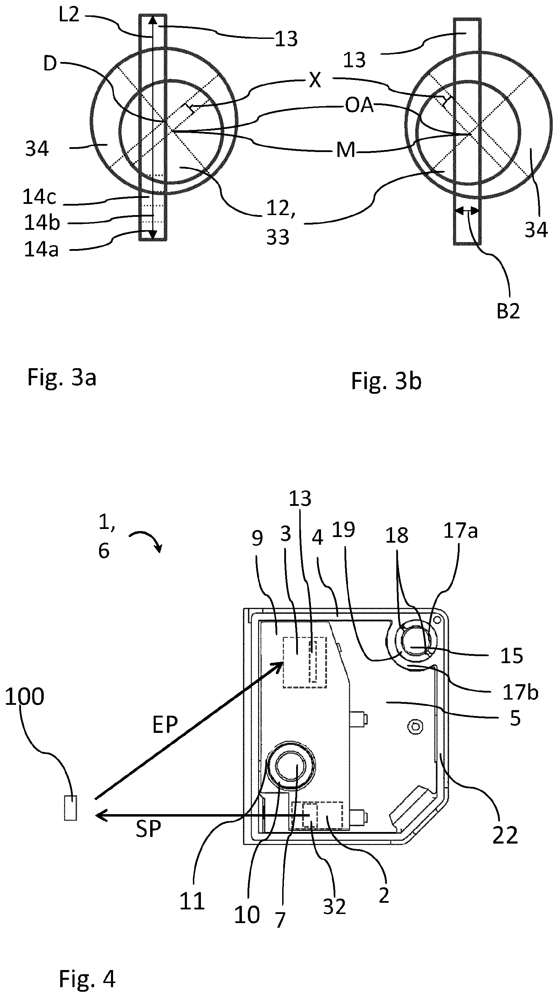

Die Fig. 1 zeigt eine schematische Längsschnittansicht einer erfindungsgemäßen Linsenfunktionseinheit 32 gemäß einer bevorzugten Ausführungsform, wobei die Linsenfunktionseinheit 32 von einem in der Fig. 4 dargestellten erfindungsgemäßen optoelektrischen Sensor 1 umfasst ist.

Die erfindungsgemäße Linsenfunktionseinheit 32 ist im vorliegenden Ausführungsbeispiel von Lichtsendemittel 2 des optoelektrischen Sensors 1 umfasst.

Die Lichtsendemittel 2 umfassen eine Laserquelle 20 und sind derart ausgebildet, dass Lichtsignale mittels der Laserquelle 20 erzeugbar und entlang des Sendelichtpfads SP aussendbar sind, um die Anwesenheit eines Objekts in einem Erfassungsbereich oder den Abstand eines Objekts 100 zum erfindungsgemäßen optoelektrischen Sensor 1 zu erfassen.

Die erfindungsgemäße Linsenfunktionseinheit 32 ist zum Bündeln und Ausrichten der mittels der Laserquelle 20 erzeugten Lichtsignale entlang des Sendelichtpfads SP und somit mittelbar auch des Empfangslichtpfads EP ausgebildet.

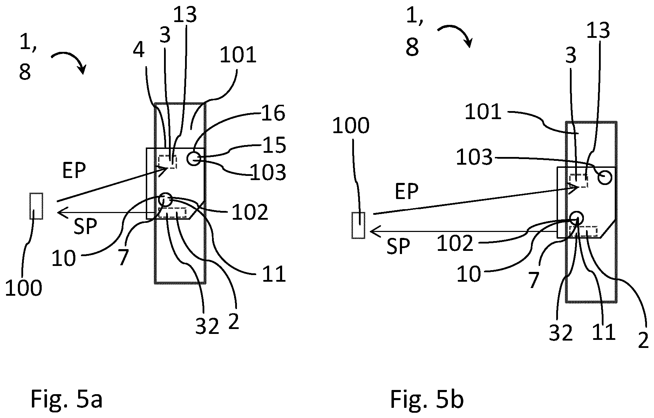

Mittelbar ausgebildet bedeutet in diesem Zusammenhang, dass der Ursprung sowie die Ausrichtung des Empfangslichtpfads EP durch den Sendelichtpfad SP und somit durch die erfindungsgemäße Linsenfunktionseinheit 32 bestimmt wird, da der Empfangslichtpfad EP durch die Reflexion der sich entlang des Sendelichtpfads SP ausbreitenden und auf ein im Erfassungsbereich anwesendes Objekt 100 auftreffende Lichtsignale bestimmt und/oder definiert wird (vgl. hierzu die Fig. 5).

Die erfindungsgemäße Linsenfunktionseinheit 32 umfasst eine Linsenaufnahme 34 zum Halten wenigstens einer Linse 33, die wenigstens eine Linse 33 sowie eine nur zum Teil dargestellte Trägereinheit 9, die zum Aufnehmen der Linsenaufnahme 34 ausgebildet ist.

Die erfindungsgemäße Linsenfunktionseinheit 32 ist so ausgestaltet, dass die Linsenaufnahme 34 in der Trägereinheit 9 zumindest in einem temporär und/oder zeitweise realisierbaren Abgleichzustand rotierbar gelagert ist.

Konkret ist die erfindungsgemäße Linsenaufnahme 34 im vorliegenden Ausführungsbeispiel derart ausgebildet, dass die Linsenaufnahme 34 zusammen mit der aufgenommenen Linse 33 um eine Drehachse D relativ zur Trägereinheit 9 rotiert werden kann. Die optische Achse OA der wenigstens einen Linse 33 ist hierbei stets um einen Abstand X von der Drehachse D räumlich beabstandet.

Es wird darauf hingewiesen, dass im Rahmen der vorliegenden Erfindung die optische Achse OA einer Linse zum einen senkrecht zur Linsenebene und zum anderen durch den Linsenmasseschwerpunkt und/oder durch die Linsenmitte verläuft.

Erfindungsgemäß vorteilhaft kann somit die wenigstens eine Linse 33 im Abgleichzustand in einer Ebene orthogonal zur Messrichtung und/oder zum Sendelichtpfad SP räumlich verschoben werden, um den Empfangslichtpfad EP relativ zum lichtsensitiven Erfassungselement 13, das von den Lichtempfangsmitteln 2 umfasst ist, auszurichten.

Durch das erfindungsgemäße Rotieren der Linsenaufnahme 34 relativ zur Trägereinheit 9 kann somit der erfindungsgemäße optoelektrische Sensor 1, der die erfindungsgemäße Linsenfunktionseinheit 32 umfasst, abgeglichen werden. Der Verlauf und/oder die Ausrichtung des Sendelichtpfads SP und/oder des Empfangslichtpfad EP wird hierbei in Bezug auf das lichtsensitive Erfassungselement 13 ausgerichtet (vgl. hierzu Fig 3a/b).

Ferner wird darauf hingewiesen, dass die optische Achse OA der wenigstens einen Linse 33 und die Drehachse D zueinander parallel verlaufen.

Anders ausgedrückt, aufgrund der räumlichen Beabstandung über den Abstand X zwischen der Drehachse D und der optischen Achse OA kann somit in Abhängigkeit der Drehposition der Linsenaufnahme 34 der Empfangslichtpfad EP hinsichtlich des lichtsensitiven Elements 13 ausgerichtet werden.

Ferner geht aus der Darstellung hervor, dass die Linsenaufnahme 34 vorliegend als ein Kreiszylinder 36 ausgebildet ist. Der Kreiszylinder 36, der zwei gegenüberliegende Stirnseiten 44a/b umfasst, die zueinander parallel ausgerichtet sind, umfasst ferner ein Durchgangsloch 35.

Das Durchgangsloch 35 ist so dimensioniert, dass die wenigstens eine Linse 33 einends aufgenommen werden kann. Anders ausgedrückt, das Durchgangsloch 35, das die beiden gegenüberliegenden Stirnseiten 44a/b des Kreiszylinders 36 unmittelbar und/oder jeweils verbindet, umfasst an einem ersten Ende einen Innendurchmesser, der dem Außendurchmesser der Linse 33 im Wesentlichen entspricht.

Weiterhin geht aus der Schnittansicht hervor, dass das Durchgangsloch 35 und/oder der Kreiszylinder 36 einen Kontaktabschnitt 37 umfasst. Der Kontaktabschnitt 37 ist bereichsweise innerhalb des Durchgangslochs 35 ausgebildet. Der Kontaktabschnitt 37 umfasst in Bezug auf das Durchgangsloch 35 einen reduzierten Innendurchmesser.

Konkret ist der Kontaktabschnitt 37 vorliegend konusförmig ausgebildet. Die Linse 33, die im Durchgangsloch 35 positioniert ist, tritt somit randseitig mit dem Kontaktabschnitt 37 in Kontakt und wird hinsichtlich einer Längsposition relativ zur Linsenaufnahme 34 innerhalb des Durchgangsloch 35 fixiert und/oder ausgerichtet.

Weiterhin geht aus der Darstellung hervor, dass ein Hülsenelement 38, im vorliegenden Fall eine Einpresshülse, im Durchgangsloch 35 so angeordnet ist, dass die wenigstens eine Linse 33 zwischen dem konusförmigen Kontaktabschnitt 37 und dem Hülsenelement 38 fixiert werden kann. Das Hülsenelement 38 und/oder das Durchgangsloch 35 sind so dimensioniert, dass das Hülsenelement 38 im Durchgangsloch 25 verpressbar ist. Anders ausgedrückt, der Innendurchmesser des Durchgangslochs 35 und der Außendurchmesser des Hülsenelements 38 sind so gewählt, dass das Hülsenelement 38 im Durchgangsloch 35 verpressbar ist.

Weiterhin umfasst die erfindungsgemäße Linsenfunktionseinheit 32 im vorliegenden Ausführungsbeispiel noch eine Blende 39, die als Lochblende ausgebildet ist.

Die Blende 39 wirkt mit der Laserquelle 20 zusammen und ermöglicht, dass die erzeugten Lichtsignale einen gemeinsamen punktförmigen Ursprung aufweisen und somit einen räumlich definierten Ursprung umfassen.

Zur Aufnahme der Linsenaufnahme 34 umfasst die Trägereinheit 9 eine Ausnehmung 40. Die Ausnehmung 40 ist zur Aufnahme der Linsenaufnahme 34 ausgebildet und umfasst vorliegend einen runden Innenquerschnitt. In dieser Ausnehmung 40 ist endseitig die Laserquelle 20 angeordnet.

Die mittels der Laserquelle 20 erzeugten Lichtstrahlen breiten sich somit entlang der Ausnehmung 40 aus und treffen dann auf die Blende 39 sowie die wenigstens eine Linse 33, um gebündelt und entlang des Sendelichtpfads in Messrichtung auf einen Erfassungsbereich ausgesendet zu werden.

Schließlich geht aus der Darstellung auch hervor, dass die Trägereinheit 9 zum Fixieren der in der Ausnehmung 40 angeordneten Linsenaufnahme 34 eine Querbohrung 41 und ein lösbares Fixierelement 42 umfasst.

Das Fixierelement 42 ist als eine Madenschraube ausgebildet und wird über ein in der Querbohrung 41 ausgebildetes Innengewinde 44 gehalten und zum Fixieren der Linsenaufnahme 34 verwendet.

Hierbei tritt das Fixierelement 42 endseitig mit der äußeren Mantelfläche der Linsenaufnahme 34 in Kontakt.

Nach dem Abgleich der Sendelichtsignale im Abgleichzustand kann somit die Rotationsposition der Linsenaufnahme 34 relativ zur Trägereinheit 9 über dieses Fixierelement 42 fixiert werden.

Zudem wird mit Bezug auf die Fig. 1 noch darauf hingewiesen, dass unabhängig von der Rotationsausrichtung der Linsenaufnahme 34 der Sendefokus durch das Verschieben der Linsenaufnahme 34 relativ zur Laserquelle 20 längs der Rotationsachse R innerhalb der Ausnehmung 40 einstellbar ist.

Neben dem erfindungsgemäßen Ausrichten der wenigstens einen Linse 33 im Abgleichzustand über die Rotationsposition der Linsenaufnahme 34 kann somit zusätzlich noch der Fokuspunkt der wenigstens einen Linse 33 durch das Festlegen der Längsposition der Linsenaufnahme 34 innerhalb der Ausnehmung 40 eingestellt werden, wobei die Linsenaufnahme 34 dann über das Fixierelement 42 fixiert wird.

Die Fig. 2 zeigt eine schematische Querschnittansicht der bereits aus der Fig. 1 bekannten erfindungsgemäßen Linsenfunktionseinheit 32 und dient zum Veranschaulichen der erfindungsgemäßen Verstellfunktionalität.

Die erfindungsgemäße Linsenfunktionseinheit 32 umfasst die wenigstens eine Linse 33, die Linsenaufnahme 34, sowie die Trägereinheit 9.

Die Linsenaufnahme 34 ist zum Halten der wenigstens einen Linse 33 ausgebildet und ist rotierbar in der Trägereinheit 9 aufgenommen.

Die Trägereinheit 9 ist zum Aufnehmen der die wenigstens einen Linse 33 umfassenden Linsenaufnahme 34 ausgebildet, wobei die Linsenaufnahme 34 so aufgenommen wird, dass in dem Abgleichzustand die Linsenaufnahme 34 um eine Drehachse D rotiert werden kann. Vorliegend verläuft die Drehachse D senkrecht zur Figurenebene.

Die wenigstens eine Linse 33, die vorliegend als Sammellinse 12 ausgebildet ist, umfasst einen runden Außendurchmesser D_{L} und einen Linsenmittelpunkt M, der genau in der Figurenebene liegt und der durch den Abstand X von der Drehachse D räumlich beabstandet ist.

Wird die Linsenaufnahme 34 nun in dem Abgleichzustand um die Drehachse D rotiert, wird die Sammellinse 12 in der Figurenebene verschoben. In Abhängigkeit der Rotationsposition der Linsenaufnahme 34 ändert sich somit der horizontale Abstand zwischen der Drehachse und dem Linsenmittelpunkt. Dieser horizontale Abstand wird stehts parallel zur Horizontalen H ermittelt. Erfindungsgemäß vorteilhaft kann somit der Empfangslichtpfad EP relativ zum lichtsensitiven Erfassungselement 13 ausgerichtet werden.

Es wird darauf hingewiesen, dass der Abstand X für sämtliche Rotationspositionen entlang des Verstellweges konstant ist. Lediglich der horizontale Abstand ändert sich für sämtliche Rotationspositionen entlang des Verstellweges.

Ferner ist in der Fig. 2 noch die in der Trägereinheit 9 ausgebildete Querbohrung 41 erkennbar, die das Innengewinde 44 umfasst. Das Innengewinde 44 ist zum Zusammenwirken mit einer Madenschraube ausgebildet, um die Madenschraube in die Querbohrung 41 einzuführen und somit die Position der Linsenaufnahme 34 relativ zur Trägereinheit 9 zu fixieren.

Die Figuren 3a/b veranschaulichen die sich ändernde Position der wenigstens einen Linse 33 vor und nach dem Durchführen des Abgleichzustands.

Zunächst wird darauf hingewiesen, dass die erfindungsgemäße Linsenfunktionseinheit 32 im vorliegenden Ausführungsbeispiel von den Lichtempfangsmitteln 3 umfasst ist. Die entsprechende Darstellung gilt jedoch auch für den Fall, dass die Linsenfunktionseinheit 32 von den Lichtsendemitteln 2 umfasst wäre, wobei dann die Empfangszeile als Projektion betrachtet werden müsste.

Die Fig. 3a zeigt in einer schematischen Querschnittansicht die erfindungsgemäße Linsenaufnahme 34 sowie die wenigstens eine Linse 33 vor dem Durchführen des Abgleichzustands.

Wie bereits erwähnt, ist die Linsenfunktionseinheit 32 im vorliegenden Ausführungsbeispiel von den Lichtempfangsmitteln 3 umfasst.

Konkret ist die Linsenfunktionseinheit 32 somit in Bezug auf den Lichtempfangslichtpfad und somit die Ausbreitungsrichtung der reflektierten Lichtsignale unmittelbar vor dem lichtsensitiven Erfassungselement 13 positioniert, um die sich entlang des Empfangslichtpfads EP ausbreitenden Lichtsignale in Bezug auf das Erfassungselement 13 umzulenken.

Ferner verläuft die optische Achse OA der wenigstens einen Linse 33 parallel zur Drehachse D. Zudem sind beide Achsen um den Abstand X voneinander beabstandet.

Aus der Fig. 3a geht hervor, dass die Linse 33 so positioniert ist, dass die optische Achse OA der Linse 33 räumlich beabstandet zum lichtsensitiven Erfassungselement 13 verläuft. Anders ausgedrückt, die Linse 33 wird von der Linsenaufnahme 34 so gehalten, dass die optische Achse OA das Erfassungselement 13 nicht schneidet.

Zudem geht aus der Darstellung hervor, dass das lichtsensitive Erfassungselement 13 als eine Empfangszeile ausgebildet ist und eine Vielzahl lichtsensitiver Erfassungsbereiche 14a-c umfasst. Die lichtsensitiven Erfassungsbereiche sind entlang der Längenerstreckung L2 des Erfassungselements 13 zueinander unmittelbar benachbart ausgebildet, wobei zur Veranschaulichung lediglich die ersten drei Erfassungsbereiche 14a-c grafisch dargestellt sind.

Das Erfassungselement 13 ist so ausgebildet, dass sämtliche Erfassungsbereiche 14a-c einzeln und unabhängig auf das Auftreffen von Lichtsignalen überwacht werden können. Vorteilhaft kann somit der Einfallswinkel der Lichtsignale erfasst werden, um daraus den Abstand des Objekts 100 vom optoelektrischen Sensor 1 zu bestimmen.

In der Fig. 3b ist das Ergebnis des Abgleichzustands dargestellt.

Die Linsenaufnahme 34 wurde um die Drehachse D rotiert, derart, dass der Mittelpunkt der Linse 33 genau mittig zur Breitenerstreckung B2 des Erfassungselements 13 angeordnet ist.

Anders ausgedrückt, die Linsenaufnahme 34 wurde um die Drehachse D in eine Rotationsposition verdreht, derart, dass die optische Achse OA der Linse 33 mittig zur Breitenerstreckung B2 des Erfassungselements 13 ausgerichtet ist.

Erfindungsgemäß vorteilhaft kann somit der Abgleich des Sendelichtpfads SP und des Empfangslichtpfads EP bzw. der Lichtsendemittel 2 und der Lichtempfangsmittel 3 technisch einfach erzielt werden.

Die Fig. 4 zeigt eine Seitenansicht einer bevorzugten Ausführungsform des erfindungsgemäßen optoelektrischen Sensors 1 in einem Auslieferzustand 6, wobei der optoelektrische Sensor 1 zum Erfassen von Objekten 100 in einem Erfassungsbereich ausgebildet ist.

Der erfindungsgemäße Sensor 1 umfasst Lichtsendemittel 2. Die erfindungsgemäßen Lichtsendemittel 2 sind zum Aussenden von Lichtsignalen ausgebildet. Die Lichtsignale bereiten sich in Messrichtung entlang eines Sendelichtpfads SP auf den Erfassungsbereich aus, um ein Objekt 100, das sich innerhalb des Erfassungsbereichs befindet, zu erfassen.

Für den Fall, dass sich ein Objekt 100 im Erfassungsbereich befindet, werden die Lichtsignale am Objekt 100 reflektiert und/oder remittiert. Ein Teil dieser Lichtsignale trifft somit wieder auf den Sensor 1.

Ferner umfasst der erfindungsgemäße Sensor 1 ein lichtsensitives Erfassungselement 13 umfassende Lichtempfangsmittel 3 zum Erfassen von den reflektierten Lichtsignalen, die sich entlang eines Empfangslichtpfads EP vom Objekt 100 in Richtung des Sensors 1 ausbreiten.

Weiterhin umfasst der erfindungsgemäße Sensor 1 ein Sensorgehäuse 4. Das Sensorgehäuse 4 umfasst eine Wandung 22 und umschließt somit einen Innenraum 5 zum Aufnehmen einer Trägereinheit 9. Die Trägereinheit 9 nimmt die Lichtsendemittel 2 und die Lichtempfangsmittel 3 auf und richtet diese zueinander aus.

Weiterhin umfasst der Sensor 1 eine Aufnahme 7, die zum Einführen und Aufnehmen eines nicht dargestellten Befestigungselements 102 ausgebildet ist, um den erfindungsgemäßen Sensor 1 in einem Betriebszustand 8 an einem externen Körper 101 festzulegen und den Erfassungsbereich auf einen zu überwachenden Bereich auszurichten.

Das Sensorgehäuse 4 umfasst einen Rohrabschnitt 10, der hülsenförmig ausgebildet ist und das Sensorgehäuse 4 in Bezug auf eine in die Figurenebene verlaufende Tiefenerstreckung TE im Bereich des Innenraums 5 vollständig durchsetzt.

Der hülsenförmige Rohrabschnitt 10 ist von der Wandung 22 des Sensorgehäuses 4 beabstandet und/oder durch separate Gehäuseelemente ausgebildet.

Im vorliegenden Ausführungsbeispiel umfasst der Rohrabschnitt 10 einen inneren und einen äußeren runden Querschnitt. Der innere Durchmesser, der als ein Durchgangsloch ausgebildet ist, ist dazu eingerichtet, ein längliches Befestigungselement in Form einer Schraube oder eines Bolzens aufzunehmen.

Ferner umfasst die erfindungsgemäße Trägereinheit 9 einen umfangsseitig geschlossenen Durchbruch 11, der in einem Auslieferzustand 6 des Sensors 1 unmittelbar benachbart zum Rohrabschnitt 10 angeordnet ist.

Der Durchbruch 11 ist im vorliegenden Ausführungsbeispiel durch eine Bohrung realisiert.

Die Innenfläche des Durchbruchs 11 und/oder die Mantelfläche der Bohrung der Trägereinheit 9 und die Außenfläche und/oder Mantelfläche des Rohrabschnitts 10 sind unmittelbar zueinander benachbart angeordnet und/oder mechanisch kontaktiert.

Anders ausgedrückt, der Durchbruch 11 und der Rohrabschnitt 10 bilden im Wesentlichen eine Formschlussverbindung aus, die sämtliche Freiheitsgrade und/oder Bewegungsachsen bis auf einen rotatorischen Freiheitsgrad fixiert. Zum Vermeiden einer Relativbewegung zwischen dem Sensorgehäuse 4 und der Trägereinheit 9 bezüglich der Tiefenerstreckung TE des Sensorgehäuses 4, die senkrecht zur Figurenebene verläuft, (vgl. symbolische Darstellung in der Fig. 2) erfolgt insbesondere eine zusätzliche Sicherung mittels eines nicht im Detail dargestellten Sicherungselements, insbesondere einer mit dem Rohrabschnitt zusammenwirkenden Mutter oder einer Schraube.

Alternativ ist es insbesondere auch vorgesehen, dass eine Fixierung der Trägereinheit 9 am Sensorgehäuse 4 mittels Klebemitteln erfolgt. Bevorzugt sollte jede Fixierung nah am gemeinsamen Fixierungspunkt vom Sensorgehäuse und der Trägereinheit realisiert werden.

Die Trägereinheit 9 besteht im vorliegenden Ausführungsbeispiel aus einem Metall und ist monolithisch ausgebildet.

Weiterhin geht aus der Fig. 4 hervor, dass der erfindungsgemäße Sensor 1 eine weitere Aufnahme 15 zum Aufnehmen eines weiteren Befestigungselements umfasst. Der Sensor 1 lässt sich somit über die erste Aufnahme 7 und die weitere Aufnahme 15 an einem externen Körper festlegen.

Die weitere Aufnahme 15 ist in Bezug auf eine thermische Ausdehnung des Sensorgehäuses 4 flexibel ausgebildet. Konkret wird dies im vorliegenden Ausführungsbeispiel dadurch realisiert, dass die weitere Aufnahme 15 durch ein inneres Hülsenelement 17a und ein äußeres Hülsenelement 17b ausgebildet ist.

Das innere Hülsenelement 17a und das äußere Hülsenelement 17b umfassen einen runden Querschnitt mit unterschiedlichem Durchmesser.

Das innere Hülsenelement 17a und das äußere Hülsenelement 17b sind zueinander koaxial ausgerichtet und über Stegelemente 18 so voneinander beabstandet, dass im Bereich der weiteren Aufnahme 15 und endseitig der Strecke zwischen der ersten Aufnahme 7 und der weiteren Aufnahme 15 ein freier Zwischenraum 19 zwischen den Stegelementen 18 und den sich gegenüberliegenden freien Mantelflächen der beiden Hülsenelemente 17a/b ausgebildet ist. Vorteilhaft kann sich das Sensorgehäuse 4 durch den freien Zwischenraum 19 somit entlang dieser Strecke ausdehnen, um thermisch induzierte Spannungen auszugleichen.

Die thermische Ausdehnung des Sensorgehäuses 4 kann sich somit gezielt derart ausbilden, dass es nicht zu einer negativen Beeinflussung des Messergebnisses des Sensors 1 kommt.

Die Lichtsendemittel 2 umfassen die nicht im Detail dargestellte erfindungsgemäße Linsenfunktionseinheit 32, wobei die Trägereinheit 9 neben der Linsenaufnahme 34 auch die Lichtsendemittel 2 und die Lichtempfangsmittel 3 räumlich zueinander aufnimmt und ausrichtet.

Durch die erfindungsgemäße Linsenfunktionseinheit 32 ist die nicht dargestellte Linsenaufnahme 34 in der Trägereinheit 9 rotierbar gelagert, um die optische Achse OA der wenigstens einen Linse 33, die nicht in der Fig. 4 dargestellt ist, in einer Ebene zu verschieben, wobei die Ebene orthogonal zur Messrichtung und/oder zum Sendelichtpfad SP verläuft. Erfindungsgemäß vorteilhaft kann somit der Empfangslichtpfad EP relativ zum lichtsensitiven Erfassungselement 13 ausgerichtet werden.

Die Fig. 5a/b zeigen zwei unterschiedliche bevorzugte Ausgestaltungen des erfindungsgemäßen optoelektrischen Sensors 1 jeweils in einem Betriebszustand 8 und/oder Funktionszustand.

Im Betriebszustand 8 bedeutet, dass der erfindungsgemäße optoelektrische Sensor 1 durch zwei Befestigungselemente 102/103 an einem externen Körper 101 so festgelegt ist, dass der Erfassungsbereich des Sensors 1 auf den zu überwachenden Bereich ausgerichtet ist.

Konkret bedeute dies, dass ein erstes Befestigungselement 102 im hülsenförmigen Rohrabschnitt 10 angeordnet ist, das den Sensor 1 somit am externen Körper 101 fixiert. Ferner ist ein weiteres Befestigungselement 103 in der weiteren Aufnahme 15 angeordnet, wobei die weitere Aufnahme 15 auch hier durch einen weiteren hülsenförmigen Rohrabschnitt 16 ausgebildet ist.

Das Ausführungsbeispiel des optoelektrischen Sensors 1 gemäß der Fig. 5a ist für eine Nahbereichsüberwachung ausgebildet und das Ausführungsbeispiel des optoelektrischen Sensors 1 gemäß der Fig. 5b ist für eine Fernbereichsüberwachung eingerichtet.

Realisiert wird dies durch zwei unterschiedliche Trägereinheiten 9, die eingerichtet sind entweder zum Empfangen von Lichtsignalen unter einem großen Winkelbereich zwischen dem Sendelichtpfad SP und dem Empfangslichtpfad EP zum Realisieren einer Nahbereichsüberwachung oder unter einem kleinen Winkelbereich zwischen dem Sendelichtpfad SE und dem Empfangslichtpfad EP zum Realisieren der Fernbereichsüberwachung.

Vorteilhaft lässt sich der erfindungsgemäße Sensor 1 somit einfach an unterschiedliche Anwendungsfälle anpassen, wobei sich die Komponenten bis auf die Trägereinheit 9 nicht voneinander unterscheiden.

In beiden Anwendungsfällen ist es nunmehr vorgesehen, dass die Lichtsendemittel 2 und/oder die Lichtempfangsmittel 3 die erfindungsgemäße Linsenfunktionseinheit 32 umfassen.

Die jeweilige Trägereinheit 9 ist in diesem Zusammenhang derart dimensioniert und gefertigt, dass aufgrund der geringen Toleranzketten lediglich ein Abgleich über die erfindungsgemäße Linsenaufnahme 34 erforderlich ist, um sicherzustellen, dass die sich entlang des Empfangslichtpfads EP ausbreitenden Lichtsignale mittig zur Breitenerstreckung des lichtsensitiven Elements 13 erfassbar sind.

## Patentansprüche

1. Optoelektrischer Sensor (1), insbesondere Triangulationssensor, zum Erfassen von Objekten (100) in einem Erfassungsbereich, aufweisend
- Lichtsendemittel (2), die so ausgebildet sind, dass Lichtsignale entlang eines Sendelichtpfads (SP), der entlang einer Messrichtung verläuft, auf den Erfassungsbereich aussendbar sind;
- Lichtempfangsmittel (3), die so ausgebildet sind, dass an einem Objekt (100) im Erfassungsbereich reflektierte und sich entlang eines Empfangslichtpfads (EP) ausbreitende Lichtsignale mittels eines lichtsensitiven Erfassungselements (13), das von den Lichtempfangsmitteln (3) umfasst ist, erfassbar sind;
- eine von den Lichtsendemitteln (2) und/oder den Lichtempfangsmitteln (3) umfasste Linsenfunktionseinheit (32), die zum Bündeln und Ausrichten der Lichtsignale entlang des Sendelichtpfads (SP) und/oder Empfangslichtpfads (EP) ausgebildet ist und wenigstens eine Linse (33), eine Linsenaufnahme (34) zum Halten der wenigstens einen Linse (33) in einem Funktionszustand sowie eine Trägereinheit (9) zum Aufnehmen der die wenigstens eine Linse (33) umfassenden Linsenaufnahme (34) in dem Funktionszustand aufweist, **dadurch gekennzeichnet,**
**dass** die Linsenaufnahme (34) in der Trägereinheit (9) zumindest in einem Abgleichzustand rotierbar gelagert ist, derart, dass die Linsenaufnahme (34) zusammen mit der wenigstens einen Linse (33) um eine Drehachse (D) relativ zur Trägereinheit (9) rotierbar ist und dass die Linsenaufnahme (34) so ausgebildet ist, dass die optische Achse (OA) der wenigstens einen Linse (33), die senkrecht zur Linsenebene ausgerichtet ist und durch den Linsenmasseschwerpunkt, insbesondere die Linsenmitte, verläuft, um einen Abstand (X) zur Drehachse (D) räumlich versetzt verläuft, um die wenigstens eine Linse (33) im Abgleichzustand in einer Ebene orthogonal zur Messrichtung zu verschieben und somit den Empfangslichtpfad (EP) relativ zum lichtsensitiven Erfassungselement (13) auszurichten.

2. Optoelektrischer Sensor nach Anspruch 1,
**dadurch gekennzeichnet,**
**dass** die Drehachse (D) und die optische Achse (OA) parallel verlaufen und/oder dass die Drehachse (D) durch die wenigstens einen Linse (33) verläuft und/oder
**dass** der Abstand (X) kleiner als der Radius (R) der wenigstens einen Linse (33) ausfällt.

3. Optoelektrischer Sensor nach einem der vorgenannten Ansprüche,
**dadurch gekennzeichnet,**
**dass** die Linsenaufnahme (34) als ein Kreiszylinder (36), insbesondere als ein senkrechter Kreiszylinder, mit einem zum Aufnehmen und Ausrichten der wenigstens einen Linse (33) im Funktionszustand ausgebildeten Durchgangsloch (35), insbesondere einer Durchgangsbohrung, ausgebildet ist, wobei der Mittelpunkt des Durchgangslochs (35) vom Mittelpunkt des Kreiszylinders räumlich beabstandet ist und insbesondere die Drehachse D durch den Mittelpunkt des Kreiszylinders verläuft.

4. Optoelektrischer Sensor nach Anspruch 3,
**dadurch gekennzeichnet,**
**dass** das Durchgangsloch (35) zur Aufnahme der wenigstens einen Linse (33) einen hinsichtlich des Innendurchmessers verringerten Kontaktabschnitt (37) umfasst, wobei der Kontaktabschnitt (37) sprung-, stufen- oder konusförmig ausgebildet ist.

5. Optoelektrischer Sensor nach Anspruch 3 oder 4,
**dadurch gekennzeichnet,**
**dass** die Linsenfunktionseinheit (32) ein Hülsenelement (38), insbesondere eine Einpresshülse, umfasst, wobei das Hülsenelement (38) so ausgebildet ist, dass es in dem Funktionszustand im Durchgangsloch (35) verpressbar ist, um die wenigstens eine Linse (33) insbesondere am Kontaktabschnitt (37) zu fixieren.

6. Optoelektrischer Sensor nach einem der vorgenannten Ansprüche,
**dadurch gekennzeichnet,**
**dass** die Linsenfunktionseinheit (32) eine Blende (39), insbesondere eine Lochblende, umfasst.

7. Optoelektrischer Sensor nach einem der vorgenannten Ansprüche,
**dadurch gekennzeichnet,**
**dass** die Trägereinheit (9) zum Aufnehmen der Linsenaufnahme (34) eine Ausnehmung (40), die insbesondere als ein weiteres Durchgangsloch oder eine, insbesondere bereichsweise ausgebildete weitere Durchgangsbohrung ausgebildet ist.

8. Optoelektrischer Sensor nach Anspruch 7,
**dadurch gekennzeichnet,**
**dass** die Trägereinheit (9) zum Fixieren der in der Ausnehmung (40) angeordneten Linsenaufnahme (34) eine Querbohrung (41) und ein lösbares Fixierelement (42), insbesondere Madenschraube, umfasst, wobei das Fixierelement (42) die Linsenaufnahme (34) aussenseitig fixiert.

9. Optoelektrischer Sensor nach einem der vorgenannten Ansprüche,
**dadurch gekennzeichnet,**
**dass** das lichtsensitive Erfassungselement (13) eine Vielzahl lichtsensitiver Erfassungsbereiche (14a-c) umfasst, die zueinander unmittelbar benachbart angeordnet sind, um die Ausrichtung des Empfangslichtpfads (EP) relativ zum Sendelichtpfad (SP) zu erfassen und somit den Abstand des Objekts (100) vom optoelektrischen Sensor (1) zu bestimmen.

10. Optoelektrischer Sensor nach einem der vorgenannten Ansprüche,
**dadurch gekennzeichnet,**
**dass** die wenigstens eine Linse (33) als eine Sammellinse (12) ausgebildet ist.

11. Optoelektrischer Sensor nach einem der vorgenannten Ansprüche,
**dadurch gekennzeichnet,**
**dass** die Trägereinheit (9) zum Aufnehmen der Lichtsendemittel (2) und der Lichtempfangsmittel (3) ausgebildet ist und/oder
**dass** die Trägereinheit (9) monolithisch und/oder einstückig ausgebildet ist und/oder
**dass** die Trägereinheit (9) aus einer Keramik oder aus einem Metall, insbesondere aus einem Stahl-Werkstoff oder einem Aluminium- Werkstoff, ausgebildet ist.
